# EUROPÄISCHE PATENTSCHRIFT

(11) **EP 1 549 189 B1**
(45) Veröffentlichungstag und Bekanntmachung des Hinweises auf die Patenterteilung: **12.04.2006**
(21) Anmeldenummer: 03798917.5
(22) Anmeldetag: 22.09.2003
(51) Int. Cl.: A47J 43/07

(54) **SCHLAGSCHEIBE FÜR KÜCHENGERÄTE**
WHIPPING DISK FOR KITCHEN APPLIANCES
PLAQUE DE BATTEMENT DESTINEE A DES APPAREILS DE CUISINE

(30) Priorität: 25.09.2002 DE 10244600
(43) Veröffentlichungstag der Anmeldung: 06.07.2005
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, Ljubno ob Savin 3333 (SI); ZIBRET, Igor, 3327 Smartno ob Paki (SI)
(86) Internationale Anmeldenummer: PCT/EP2003/010531
(87) Internationale Veröffentlichungsnummer: WO 2004/030498

(56) Entgegenhaltungen:
- DE-U- 1 724 140
- DE-U- 8 811 946

## Beschreibung

Die vorliegende Erfindung betrifft eine Vorrichtung zum Zubereiten von Lebensmitteln mit einem im Wesentlichen ebenen Scheibenabschnitt, der in einem Behältnis eines Küchengeräts von einer Antriebswelle antreibbar ist und der an seiner Oberfläche mindestens eine Erhebung aufweist. Insbesondere betrifft die vorliegende Erfindung eine Schlagscheibe für Küchengeräte.

Zum Rühren von Mayonnaise, Schlagen von Eischnee oder Sahne und zum Aufschäumen von Milch werden in der Regel Küchengeräte eingesetzt, bei denen in eine Schüssel die zu verarbeitenden Lebensmittel eingefüllt werden. In der Schüssel wird sodann eine Mixeinheit oder Schlagscheibe zur jeweiligen Zubereitung mit hoher Drehzahl betrieben.

Zu derartigen Küchengeräten zählen auch sogenannte Chopper (Zerhacker), mit denen gröbere Bestandteile von Lebensmitteln zerkleinert und gegebenenfalls zu Mus verarbeitet werden können. Die Chopper können aber auch zum Mischen von flüssigen beziehungsweise breiartigen Lebensmitteln sowie zum Schlagen von Sahne und dergleichen verwendet werden.

Der Aufbau eines Choppers besteht typischerweise aus einem schüsselartigen Behältnis und einer mit hoher Drehzahl rotierenden Funktionseinheit (Arbeitswerkzeug), die in der Regel am Boden des Behältnisses angeordnet ist. Der Antrieb dieser Funktionseinheit beziehungsweise dieses Werkzeugs kann unterhalb oder oberhalb des Behältnisses vorgesehen sein. Das Behältnis wird meist mit einem Deckel verschlossen, um ein Herausspritzen aus dem Behältnis zu vermeiden.

Ein gattungsgemäßes Küchengerät ist aus dem deutschen Gebrauchsmuster DE 88 11 946.7 U1 bekannt. Dort ist eine Rührvorrichtung zum Zubereiten von Schaumspeisen, wie Schlagsahne oder Eischnee, mit einer in einem Behälter von einer Antriebswelle antreibbaren Scheibe, auf deren der Öffnung des Behälters zugewandten Oberseite ein Schaft und Erhebungen ausgebildet sind, beschrieben. Verbindungslinien der Erhebungen bilden mehrere Spiralen, die einer sich in Drehrichtung öffnenden Spirale folgen. Wird die Scheibe der Rührvorrichtung in Drehung versetzt, so bewirken die von der Scheibe auf das Schlaggut einwirkenden Zentrifugalkräfte eine Bewegung des Rührgutes nach außen. Eine besonders gute Zirkulation des Schlagguts und eine Einbringung von Luft in das Schlaggut wird scheinbar dann erreicht, wenn die Verbindungslinien der Erhebungen der Spirale längs einem Drehwinkel von 540° folgen und sich dabei aus dem Bereich des auf der Scheibe konzentrisch angeordneten Schafts in den Randbereich der Scheibe erstreckt. Optimale Resultate scheinen sich zu ergeben, wenn die Verbindungslinien der Erhebungen zwei gleichartigen Spiralen folgen und wenn die einander entsprechenden Anfangs- und Endpunkte der Verbindungslinien um einen Winkel von 180° gegeneinander versetzt sind.

In der deutschen Patentschrift DE 36 35 086 C1 ist ebenfalls eine Scheibe für eine Vorrichtung zum Zubereiten von Nahrungsmitteln, insbesondere Sahne oder Eischnee, beschrieben. Die Scheibe ist in einem Behälter über dessen Boden auf einer Kupplungswelle drehbar angeordnet und weist an ihrer Oberfläche auf das Nahrungsmittel einwirkende Erhebungen auf. Die Scheibe bildet eine ebene Oberfläche und die Größenordnung der Erhebungen erstreckt sich im Rauhtiefenbereich zwischen 0,1 und 0,5 mm. Trotz der relativ kleinen Erhebungen wird dennoch beim Drehen der Scheibe das Rührgut in Rotation versetzt und durch die auf das Rührgut einwirkenden Fliehkräfte nach außen gedrängt. Dabei wird ausreichend Luft in das Rührgut eingebracht, wobei dieser Vorgang einzig und allein durch die rauhe Oberfläche der Scheibe hervorgerufen wird. Anschließend steigt das Rührgut beziehungsweise die nach außen gedrängte Flüssigkeit an der Innenwand des Behälters hoch und kippt dann nach innen um. Ferner ist dort eine Scheibe beschrieben, bei der sich zahlreiche, dicht nebeneinander angeordnete sich radial erstreckende Rippen oder Noppen nur an der Oberfläche der Rührscheibe befinden. Anstelle der zahlreichen, dicht nebeneinander angeordneten Noppen oder Rippen können auch lediglich einzelne Noppen, Rippen oder Stege vorgesehen sein, die auf einer sich von der Mittelachse der Scheibe radial beziehungsweise spiralförmig nach außen verlaufenden Linie angeordnet sind.

Die Aufgabe der vorliegenden Erfindung besteht darin, die Stabilität einer Schlagscheibenvorrichtung zu verbessern und gleichzeitig deren Leistungsfähigkeit hinsichtlich der Zubereitung der Nahrungsmittel zu erhöhen.

Erfindungsgemäß wird diese Aufgabe gelöst durch eine Vorrichtung zum Zubereiten von Lebensmitteln mit einem im Wesentlichen ebenen Scheibenabschnitt, der in einem Behältnis eines Küchengeräts von einer Antriebswelle antreibbar ist und der an seiner Oberfläche eine erste Erhebung aufweist, wobei die erste Erhebung ringförmig und konzentrisch mit dem Scheibenabschnitt ist.

In einer vorteilhaften Weiterbildung der erfindungsgemäßen Vorrichtung ist mindestens eine zweite Erhebung in dem Scheibenabschnitt ausgeformt, die ebenfalls ringförmig ist und konzentrisch mit der ersten Erhebung angeordnet ist. Mit dieser Anordnung ergibt sich eine optimierte Verwirbelung der Flüssigkeit im Bereich der Schlagscheibe.

Hierzu sollte sich die erste Erhebung, d.h., der erste Ring, aus der Scheibenebene in einer ersten Richtung und die zweite Erhebung, d.h., der zweite Ring, aus der Scheibenebene in entgegengesetzter zweiter Richtung erheben. Somit ergibt sich ein sinusförmiges Profil in radialer Richtung und ebenfalls eine verbesserter Verwirbelung. Die Erhebungen können jeweils im radialen Profil einen im Wesentlichen parallel zur Scheibenebene liegenden Hauptabschnitt aufweisen. Vorzugsweise weist der Scheibenabschnitt Erhebungen aufweist, deren Hauptabschnitte bezogen auf eine Scheiben- bzw. Mittelebene des Scheibenabschnitts in radialer Richtung von innen nach außen betrachtet angeordnet sind in der Reihenfolge: oberhalb, unterhalb, oberhalb und unterhalb der Mittelebene. Mit dieser Anordnung konnten die besten Ergebnisse erzielt werden.

An den Seiten des Hauptabschnitts können Seitenabschnitte angeordnet sein, die zwischen 30 ° und 60° und vorzugsweise 45 ° zur Scheibenebene im radialen Profil geneigt sind. Diese Neigungswinkel der Seitenabschnitte gewährleisten gute Arbeitsergebnisse und eine hinreichende Praktikabilität, was die Reinigung anbelangt.

Zwischen dem Hauptabschnitt und den Seitenabschnitten sollten verhältnismäßig scharfe Kanten vorgesehen sein, die ebenfalls das Arbeitsergebnis positiv beeinflussen. Je größer die Radien der Rundungen für die Übergänge gewählt werden, desto schlechter werden die Arbeitsergebnisse ausfallen. Bewährte Radien liegen zwischen 0 und 2 mm. Bevorzugt wird ein Radius von 1 mm eingesetzt.

In der Nähe des Zentrums des Scheibenabschnitts können mehrere Bohrungen angeordnet sein. Sie können in Umfangsrichtung gleichmäßig verteilt sein und ihre Anzahl kann zwischen zwei und acht, vorzugsweise bei vier, und ihr Durchmesser zwischen 2 und 7 mm, vorzugsweise bei 4,5 mm, liegen. Die Bohrungen dienen zur Reduktion des Unterdrucks, der bei Rotation des Scheibenabschnitts zwischen diesem und dem Schüsselboden entsteht und das Axiallager der Schlagscheibe übermäßig belasten würde.

Im Zentrum kann der Scheibenabschnitt mit einer Antriebswelle verbunden sein. Vorzugsweise ist der Scheibenabschnitt mit der Antriebswelle einteilig gebildet. Mit dem Scheibenabschnitt und der Antriebswelle ergibt sich ein kompletter Einsatz für ein Küchengerät, der ohne Weiteres austauschbar ist. So lassen sich Küchengeräte, insbesondere Chopper oder Rührgeräte mit derartigen Vorrichtungen, nämlich insbesondere Schlagscheiben, ausstatten. In vorteilhafter Weise können mit dieser Schlagscheibe mehrere Funktionen erfüllt werden. So kann beispielsweise Mayonnaise gerührt, Sahne und Eischnee geschlagen, aber auch Milch im warmen oder kalten Zustand geschäumt werden. Insbesondere zum Schäumen der Milch bedarf es also nicht eines zusätzlichen Zubehörs wie eines Rührbesens.

Neben dieser Mehrfachfunktionalität gewährleisten die beiden konzentrischen Ringe des Scheibenabschnitts auch eine erhöhte Steifigkeit der Platte.

Die vorliegende Erfindung wird nun anhand der beigefügten Zeichnungen erläutert, in denen zeigen:
- Figur 1:: eine Querschnittsansicht eines erfindungsgemäßen Choppers;
- Figur 2:: eine Querschnittsansicht der erfindungsgemäßen Schlagscheibe; und
- Figur 3:: eine perspektivische Ansicht der erfindungsgemäßen Schlagscheibe.

Die nachfolgend aufgeführten Ausführungsformen stellen bevorzugte Ausführungsbeispiele der vorliegenden Erfindung dar.

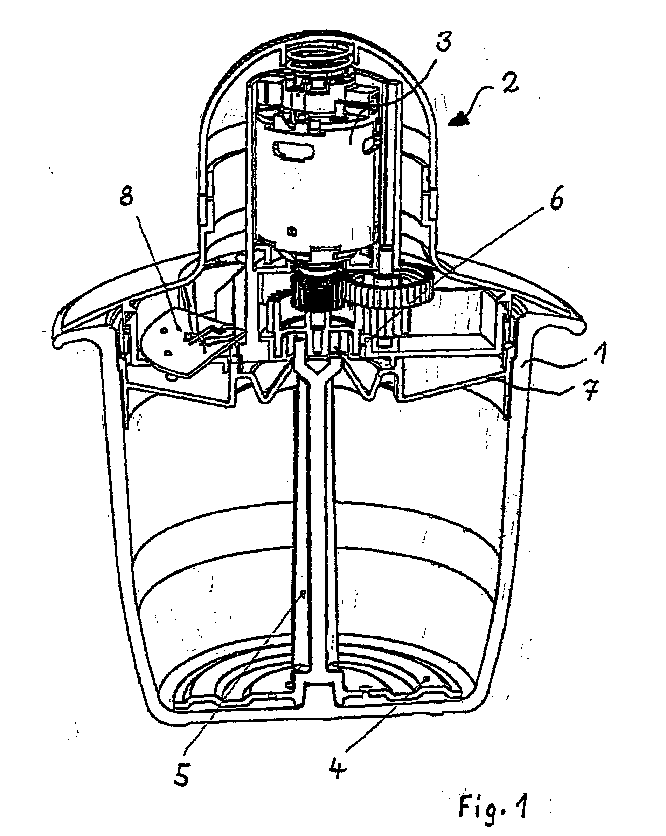

Figur 1 zeigt einen Querschnitt durch einen Chopper. Der Chopper umfasst eine Schüssel 1 und einen Deckel 2. Der Deckel 2 dient nicht nur zum Abdichten der Schüssel 1 sondern beinhaltet gleichzeitig einen elektrischen Kleinmotor 3 einschließlich Getriebe zum Antrieb einer Schlagscheibe 4, die am Boden der Schüssel 1 drehbar gelagert ist. Eine Welle 5 überträgt das Drehmoment vom Getriebe des Elektromotors 3 zu der Schlagscheibe 4. Die Schlagscheibe 4 dient beispielsweise zum Schlagen von Eiklar oder Sahne.

Die Lagerung der Welle 5 in dem Deckel 2 unterhalb des Getriebes des Elektromotors 3 erfolgt durch ein Axial/Radial-Gleitlager 6.

An der Unterseite des Deckels zum Inneren der Schüssel zugewandt befindet sich ein Deckabschnitt 7. Dieser Deckabschnitt dient zum Abdecken beziehungsweise Abdichten des in der Schüssel 1 befindlichen fließenden Mediums, wie Flüssigkeiten, Brei, Eiswürfel, etc. Der Deckabschnitt 7 ist zur Durchführung der Welle 5 im Zentrum durchbrochen.

Der Deckel 2 weist femer einen integrierten Schalter 8 auf, der mit einer Sicherheitsfunktion ausgestattet ist. Erst wenn der Deckel 2 auf die Schüssel 1 ordnungsgemäß aufgebracht ist, erlaubt dieser Sichefieitsschalter 8 den Betrieb des Choppers.

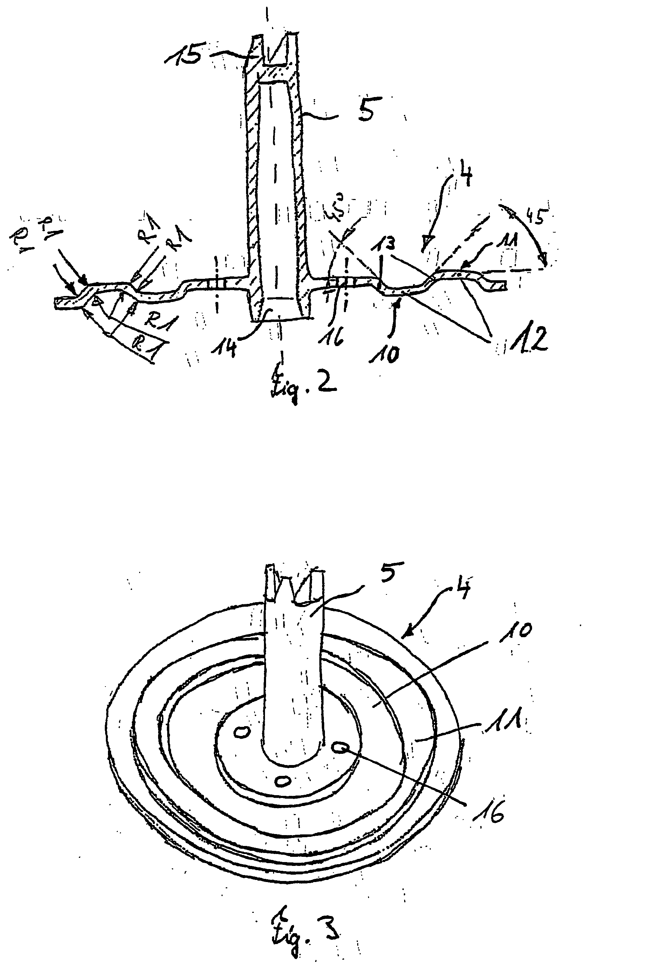

In Figur 2 ist ein Querschnitt durch die erfindungsgemäße Schlagscheibe dargestellt. Sie besteht im Wesentlichen aus einem ebenen Scheibenabschnitt 4, der im Zentrum an eine Antriebswelle beziehungsweise einen Schaft 5 angeformt ist. Im vorliegenden Fall sind die beiden Komponenten 4 und 5 einteilig miteinander verbunden.

Wie aus der perspektivischen Ansicht von Figur 3 ersichtlich ist, umfasst der Scheibenabschnitt 4 konzentrische Erhebungen 11 beziehungsweise Vertiefungen 10, welche von der anderen Seite der Scheibe ebenfalls als Erhöhungen anzusehen sind. Vom Zentrum her betrachtet erstreckt sich die Scheibe 4 zunächst auf der Scheibenebene nach außen. Nach einem gewissen radialen Stück, betrachtet von der Oberseite aus, befindet sich eine Vertiefung beziehungsweise negative Erhöhung 10. Daran radial anschließend befindet sich eine Erhöhung 11. Sowohl die Vertiefung 10 als auch die Erhöhung 11 besitzen in ihrer Mitte einen Hauptabschnitt 12, der im Wesentlichen parallel zur Scheibenebene ausgerichtet ist. Radial betrachtet befinden sich an beiden Seiten jedes Hauptabschnittes 12 Seitenabschnitte 13, die 45° zur Scheibenebene geneigt sind. Die Seitenabschnitte 13 und die Hauptabschnitte 12 sind mit den anderen Bereichen des Scheibenabschnitts 4 und untereinander mit Rundungen verbunden, deren Durchmesser einheitlich ist und mit R1 bezeichnet ist. Insgesamt ergibt sich damit ein sinusförmige Gestalt der Vertiefung 10 und Erhöhung 11 im Profil.

im vorliegenden Fall umfasst das Sinusprofil der Schlagscheibe etwas mehr als eine vollständige Sinusperiode. Je nach Viskosität der zuzubereitenden Lebensmittel kann die Anzahl der Sinusperioden pro Schlagscheibe auch variiert werden. So kann das Sinusprofil des Scheibenabschittsradius auch 0,5, 0,75, 1,5, 2 etc. Sinusperioden und Zwischenstufen davon umfassen. Für das Schlagen von Sahne und Eischnee hat sich die dargestellte Form mit einer einzelnen Ringvertiefung 10 und einer einzelnen konzentrischen Ringerhebung 11 bewährt.

Der Radius R1 ist aus fertigungstechnischen Gründen überall an den Biegungen des Scheibenabschnittes 4 gleich gewählt. Unterschiedliche Radien würden aber grundsätzlich die Wirkungsweise der Schlagscheibe nicht verändern. Aus strömungstechnischen Gesichtspunkten und zur Minimierung einer Verletzungsgefahr ist der Radius R1 eher größer zu wählen.

Der Scheibenabschnitt 4 weist darüber hinaus in der Nähe des Zentrums vier in Umfangsrichtung verteilte Bohrungen 16 auf. Sie weisen einen Durchmesser von 4,5 mm auf. Ihr Zweck liegt darin, den Unterdruck an der Unterseite der Scheibe zu reduzieren, der dadurch entsteht, dass das zu schlagende Medium durch die Rotation der Scheibe nach außen wandert. Durch die Bohrungen 16 kann weiteres Material unter den Scheibenabschnitt 4 gelangen, so dass die axiale Kraft auf das Lager der Schlagscheibe reduziert wird.

Der Schaft 5 zum Antrieb des Scheibenabschnitts 4 besteht im Wesentlichen aus einer Hohlwelle, wobei der Scheibenabschnitt 4 in der Nähe des einen Endes der Antriebswelle 5 angeordnet ist. An diesem Ende befindet sich auch eine konische Aussparung 14 in der Antriebswelle 5, die zur Lagerung der Schlagscheibe dient (vergleiche Figur 1). Am gegenüberliegenden Ende der Antriebswelle 5 ist ein Antriebskupplungsabschnitt 15 ausgebildet. Dieser dient zum drehfesten Eingriff in eine Abtriebskupplung des Deckels 2.

## Patentansprüche

1. Vorrichtung zum Zubereiten von Lebensmitteln mit
einem im Wesentlichen ebenen Scheibenabschnitt (4), der in einem Behältnis (1) eines Küchengeräts von einer Antriebswelle (5) antreibbar ist und der an seiner Oberfläche eine erste Erhebung (10) aufweist,
**dadurch gekennzeichnet, dass**
die erste Erhebung (10) ringförmig und konzentrisch mit dem Scheibenabschnitt (4) ist.

2. Vorrichtung nach Anspruch 1, wobei der Scheibenabschnitt (4) eine zweite, ringförmige Erhebung (11) aufweist, welche konzentrisch mit der ersten Erhebung (10) angeordnet ist.

3. Vorrichtung nach Anspruch 1 oder 2, wobei sich die erste Erhebung (10) aus der Scheibenebene des Scheibenabschnitts (4) in einer ersten Richtung und die zweite Erhebung (11) aus der Scheibenebene in entgegengesetzter zweiter Richtung erhebt.

4. Vorrichtung nach einem der Ansprüche 1 bis 3, wobei jede Erhebung des Scheibenabschnitts (4) im radialen Profil einen im Wesentlichen parallel zur Scheibenebene liegenden Hauptabschnitt (12) aufweist.

5. Vorrichtung nach einem der Ansprüche 1 bis 4, wobei der Scheibenabschnitt (4) Erhebungen aufweist, deren Hauptabschnitte bezogen auf eine Mittelebene des Scheibenabschnitts (4) in radialer Richtung von innen nach außen betrachtet angeordnet sind in der Reihenfolge: oberhalb, unterhalb, oberhalb und unterhalb der Mittelebene.

6. Vorrichtung nach Anspruch 4 oder 5, wobei an den Seiten des Hauptabschnitts (12) Seitenabschnitte (13) angeordnet sind, die zwischen 30 ° und 60° zur Scheibenebene im radialen Profil geneigt sind.

7. Vorrichtung nach Anspruch 6, wobei die Seitenabschnitte (13) zur Scheibenebene in etwa 45° im radialen Profil geneigt sind.

8. Vorrichtung nach einem der Ansprüche 4 bis 7, wobei zwischen dem Hauptabschnitt (12) und den Seitenabschnitten (13) Rundungen mit einheitlich vorbestimmten Radien (R1), insbesondere mit der Größe 0 bis 2 mm, bevorzugt 1 mm, geformt sind.

9. Vorrichtung nach einem der Ansprüche 1 bis 8, wobei in der Nähe des Zentrums des Scheibenabschnitts (4) mehrere Bohrungen (16) angeordnet sind.

10. Vorrichtung nach Anspruch 9, wobei die Bohrungen in Umfangsrichtung gleichmäßig verteilt sind, ihre Anzahl zwischen zwei und acht liegt und ihr Durchmesser zwischen 2 und 7 mm liegt.

11. Vorrichtung nach einem der Ansprüche 1 bis 10, wobei der Scheibenabschnitt (4) im Zentrum mit einer Antriebswelle (5) verbunden ist.

12. Vorrichtung nach Anspruch 11, wobei der Scheibenabschnitt (4) mit der Antriebswelle (5) einteilig verbunden ist.

13. Küchengerät, insbesondere Chopper oder Rührgerät, mit einer Vorrichtung nach einem der Ansprüche 1 bis 12.

## Claims

1. Device for preparing foodstuffs, comprising a substantially planar disc section (4), which is drivable in a container (1) of a kitchen appliance by a drive shaft (5) and which has a first elevation (10) at its surface, **characterised in that** the first elevation (10) is annular and concentric with the disc section (4).

2. Device according to claim 1, wherein the disc section (4) has a second, annular elevation (11), which is arranged concentrically with the first elevation (10).

3. Device according to claim 1 or 2, wherein the first elevation (10) protrudes from the disc plane of the disc section (4) in a first direction and the second elevation (11) protrudes from the disc plane in an opposite, second direction.

4. Device according to one of claims 1 to 3, wherein each elevation of the disc section (4) has in radial direction a main section (12) lying substantially parallel to the disc plane.

5. Device according to one of claims 1 to 4, wherein the disc section (4) has elevations, the main sections of which referred to a centre plane of the disc section (4) are arranged, considered in radial direction from the inside to the outside, in the sequence: above, below, above and below the centre plane.

6. Device according to claim 4 or 5, wherein side sections (13) are arranged at the sides of the main section (12) and are inclined between 30° and 60° relative to the disc plane in the radial profile.

7. Device according to claim 6, wherein the side sections (13) are inclined relative to the disc plane at approximately 45° in the radial profile.

8. Device according to one of claims 4 to 7, wherein radiusings with uniform predetermined radii (R1), particularly with the size 0 to 2 millimetres, preferably 1 millimetre, are formed between the main section (12) and the side sections (13).

9. Device according to one of claims 1 to 8, wherein several bores (16) are arranged in the vicinity of the centre of the disc section (4).

10. Device according to claim 9, wherein the bores are uniformly distributed in the circumferential direction, their number lies between two and eight and their diameter lies between 2 and 7 millimetres.

11. Device according to one of claims 1 to 10, wherein the disc section (4) is connected in the centre with a drive shaft (5).

12. Device according to claim 11, wherein the disc section (4) is integrally connected with the drive shaft (5).

13. Kitchen appliance, particularly a chopper or an agitator, with a device according to one of claims 1 to 12.

## Revendications

1. Dispositif pour la préparation d'aliments doté d'une section en disque (4) essentiellement plane pouvant être entraînée par un arbre d'entraînement (5) dans un récipient (1) d'un appareil ménager et présentant un premier renflement (10) sur sa surface, **caractérisé en ce que** le premier renflement (10) est annulaire et concentrique avec la section en disque (4).

2. Dispositif selon la revendication 1, la section en disque (4) présentant un deuxième renflement (11) annulaire disposé de manière concentrique avec le premier renflement (10).

3. Dispositif selon l'une quelconque des revendications 1 ou 2, le premier renflement (10) s'élevant à partir du plan du disque de la section en disque (4) dans une première direction, et le deuxième renflement (11) s'élevant à partir du plan du disque dans une deuxième direction opposée.

4. Dispositif selon l'une quelconque des revendications 1 à 3, chaque renflement de la section en disque (4) présentant en profil radial une section principale (12) essentiellement parallèle au plan du disque.

5. Dispositif selon l'une quelconque des revendications 1 à 4, la section en disque (4) présentant des renflements dont les sections principales, par rapport à un plan médian de la section en disque (4), sont disposées en direction radiale vu de l'intérieur vers l'extérieur, dans l'ordre : au-dessus du plan médian, en dessous, au-dessus et en dessous.

6. Dispositif selon l'une quelconque des revendications 4 ou 5, des sections latérales (13), inclinées entre 30° et 60° par rapport au plan du disque en profil radial, étant disposées sur les côtés de la section principale (12).

7. Dispositif selon la revendication 6, les sections latérales (13) étant inclinées d'environ 45° par rapport au plan du disque en profil radial.

8. Dispositif selon l'une quelconque des revendications 4 à 7, des arrondis ayant des rayons (R1) prédéfinis de manière uniforme, notamment de la taille de 0 à 2 mm, de préférence de 1mm, étant formés entre la section principale (12) et les sections latérales (13).

9. Dispositif selon l'une quelconque des revendications 1 à 8, plusieurs alésages (16) étant disposés à proximité du centre de la section en disque (4).

10. Dispositif selon la revendication 9, les alésages étant répartis régulièrement dans le sens circonférentiel, leur nombre étant compris entre deux et huit et leur diamètre entre 2 et 7 mm.

11. Dispositif selon l'une quelconque des revendications 1 à 10, la section en disque (4) étant raccordée au centre à un arbre d'entraînement (5).

12. Dispositif selon la revendication 11, la section en disque (4) étant raccordée à l'arbre d'entraînement (5) d'une seule pièce.

13. Appareil ménager, notamment un hacheur ou un mixeur, doté d'un dispositif selon l'une quelconque des revendications 1 à 12.
